Europäisches Patentamt

**European Patent Office**

Office européen des brevets

(19)

(11) Publication number: **0 041 082**

**A1**

(12) **EUROPEAN PATENT APPLICATION**

(21) Application number: **80301792.0**

(22) Date of filing: **30.05.80**

(51) Int. Cl.³: **A 47 J 31/42**
**A 23 N 12/12**

(43) Date of publication of application:
**09.12.81 Bulletin 81/49**

(84) Designated Contracting States:
**AT BE CH DE FR GB IT LI LU NL SE**

(71) Applicant: **Sandor, Steven Davis**
**19, Woodmount Crescent**
**K2E 5P9 Ottawa(CA)**

(72) Inventor: **Sandor, Steven Davis**
**19, Woodmount Crescent**
**K2E 5P9 Ottawa(CA)**

(74) Representative: **Walter, Douglas Ernest et al,**
**HASELTINE LAKE & CO. 28, Southampton Buildings**
**London WC2A 1AT(GB)**

(54) **Method and apparatus for making hot beverages.**

(57) The invention introduces an apparatus and a method whereby most of the enticing fragrances and aromas of foodstuffs, like coffee for instance, which otherwise, by the methods employed heretofore escaped during roasting and/or grinding, can be used and mixed or absorbed in the drink.

This object is achieved by *roasting, grinding and infusing the coffee in the same (heatable) container* (113) or basket, i.e. *without transferring the roasted coffee beans to another work-station for grinding,* and by the fact the hot water and/or steam, while dropping down from the top of the vessel (120) surrounding the basket, gets in touch with the fragrances and aromas developed during roasting and grinding, mixes with them and absorbs some or most of them. This feat is achieved through the apparatus which features a heatable basket (113) for hard or soft foodstuffs and a rotating blade (112) to ensure a uniform roast. When the beans are roasted, the heating of the basket is switched off and the blade is rotated at higher speed, whereby the roasted stuff is ground. At the same time water is heated and the hot water and/or steam is lead to the top of the (practically) closed unit from where, while dropping, the water and/or steam mixes with and absorbs the aromas and fragrances, reaching the basket and its contents, leaches the grind and, through perforations on the basket, drips to the bottom of the vessel.

*Fig. 3*

METHOD AND APPARATUS FOR MAKING HOT BEVERAGES

Background of the invention
(Problems)

A good cup of coffee is best achieved when freshly roasted coffee beans have been ground, and the freshly ground coffee is percolated properly. "Good" coffee is not only good tasting but also of fine aroma. By this I mean that it should contain as much of the enticing volatile aromas and frangrances of coffee as possible. Some of these fragrances appeal to the coffee-drinkers' sense of smell, while other aromas contribute to the taste.

As can be seen, in this disclosure "aromas" and "fragrances" are used somewhat alternatively. I use "aromas" and "fragrances" as a vapour or gaseous substance.

Some parts which exude these aromas or fragrances may evaporate at a certain state, and some parts may enter the liquid.

A part of the enticing fragrances contained in the coffee beans disappears into the environment during and immediately after the process of roasting. Additional fragrances are released and lost when grinding opens up the inside of the coffee beans.

There have been earlier attempts to make a good coffee drink by roasting green coffee beans, grinding the roasted coffee and brewing it all in the same environment, but these machines did not produce a good, really flavourful drink with much fragrance, partly because they were clumsy and com-plicated and because the fragrances were scattered around in the machine and could not be reached by the water.

One such earlier attempt is disclosed in U.S. Pat. 399,803 to Wagner. He suggests roasting and grinding in a drum but makes no attempt to transfer the aromas thus generated into the drink. The majority of the fragrances stay in the drum until the drum is opened for loading the next batch of green coffee beans. Another drawback of the Wagner design is the fact that the ground coffee floats on the top of the water and descends into the water slowly, certainly slower than in the 2 minutes which is considered to be the ideal time for brewing. 2 minutes is the recommendation found in the publication entitled "Scientific Coffee Research" by MIT professor S. Prescott, cited in U.S. Patent 2,906,193 to McCauley, column 2, lines 23 through 27.

In U.S. Pat. 1,063,188, de Simone tried to return rising fragrances into the brew by condensing them and feeding the condensate into a separate water container. The design is such that only a small fraction of the fragrances can be recovered. Little, if any of the fragrances from roasting can reach the grinding compartment. The fragrances from the grinder rise and are supposed to enter a cold-water container which has piping to the strainer basket. The de Simone apparatus employs separate compartments for roasting, grinding, and brewing and has only one mode of operation. My apparatus is one in which roasting, grinding and brewing are performed in a single receptacle (basket) and it is particularly adapted for operation in any of several modes, thus enabling one to prepare different beverages requiring different grinding, roasting and brewing cycles, as will be described henceforth.

A further prior art device, disclosed by Bosak in U.S. Pat. 3,153,377 appears to be directed to this subject matter in that the apparatus provides for roasting, grinding and brewing in a single combined machine. However, as in the de Simone patent, the apparatus has only a single mode of operations and is merely an aggregation of three devices and there is no provision for gathering and using the fragrances exuded during roasting and grinding.

As presently envisaged, this invention is applicable to the brewing of coffee, various coffee substitutes and
other foodstuffs which may be heated and/or ground and/or
infused.  Subsequent references to coffee are to be understood to include all of the above.

Objects of the invention
(Solution)

     It is the object of my invention to produce a superior
brewed beverage by uniform roasting, quick grinding, properly timed brewing and re-introduction of more aromatic fragrances than has been possible heretofore.  This is accomplished by roasting and grinding in a single closed space,
passing hot water or steam through the fragrances exuded
during the roasting and grinding steps in a manner which
ensures maximum intermingling of the fragrances and the
fluid.  This feat is achieved through the novel construction
of the herein disclosed apparatus for making hot beverages,
which apparatus features a heatable basket for hard and/or
soft foodstuff and one or more rotating blades in the basket
which blades can slowly stir up to 250 revolutions/minute
the roasting foodstuff to ensure a uniform roast.  When the
beans are roasted, the heating of the basket is switched
off and the blade is rotated at higher speeds (about 1500 -
10,000 revs./min) according to need, whereby the roasted
stuff is ground.  At the same time water is heated and the
hot water and/or steam is lead to the top of the (practically) closed unit from where, while dropping, the water and/or
steam mixes with and absorbs aromas and fragrances, reaching
the basket and its contents, leaches the grind and, through
perforations on the basket, drips to the bottom of the
vessel.

     Furthermore, another object of the invention is to
introduce a method whereby hot beverages may be made which
require that the sequence of steps be reversed, i.e. grinding may take place first and roasting be carried out later. In this way partial roasting, grinding and final roasting, or partial grinding, roasting and fine grinding can be achieved, etc. Also, since the grinding is done by a blade, which will grind soft foodstuffs also (while the old fashioned grinders in the prior art coffee makers employed toothed gear grinders which become clogged if fed with soft substances), a wide variety of hot beverages may be made with my method, e.g. onion soup. Pastes may also be made with my method and apparatus.

By use of this invention one can save on the quantity of the foodstuff required. By slowly stirring the grind while the steam or boiling water is passing through the basket, a more thorough leaching can be achieved than by any other presently known method of beverage making, i.e. less raw material will produce a higher quality drink.

The invention may be carried into practice in a number of ways, according to the basic features in my method outlined above, by adapting some details to the special requirements for certain types of beverage to be produced.

A more detailed description of the invention
It should be emphasized that the invention encompasses a much broader territory than just coffee-making, nevertheless it appears to be appropriate to demonstrate the process by discussing some aspects of my method and apparatus when a good, flavourful, aromatic coffee is made.

Some specific embodiments of the invention will now be described by way of examples, with reference to the accompanying drawings. Sizes and shapes in the drawings are merely illustrative of one of more possible embodiments, and not restrictive of the present inventive concept. In short:

the invention is illustrated by, but not limited to the
following examples.

## A brief description of the drawings

Fig. 1 is a side view (partially broken away) of a coffee
     maker

Fig. 2 shows the top of the basket viewed from above

Fig. 2a shows the same top in side view

Fig. 3 represents a side view (partially broken away) of a
     "drip type" coffee maker incorporating the invention

Fig. 4 presented on the sheet with Figs. 2 and 2a, is a section taken on line B-B in Fig. 3 and shows an example
     how the current may be fed into the electric heating
     plate.

## A more detailed description of some
## preferred embodiments

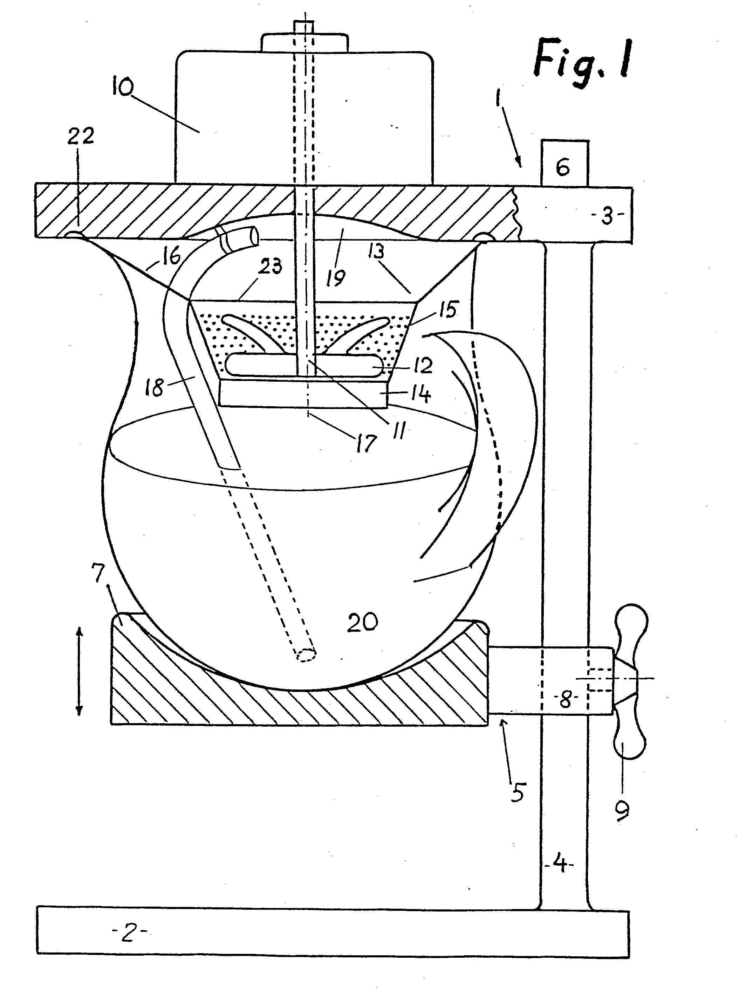

In Fig. 1 reference numeral (1) denotes a stand of a
coffee making unit which works with the so called "pump",
well known, for instance, from the PIREX ® percolator. This
stand (1) consists of a base (2), roof (3), and a column (4),
which latter connects (2) and (3). The column must be strong
enough to firmly support on its lower part the slide (5)
which is slidably fixed on column (4), and, on its upper part,
to support the electric motor (10) on top of the roof.

The electric motor can be driven at several speeds.

Slide (5) consists of three main parts, namely of heating platform (7), glider (8) and wing screw (9).

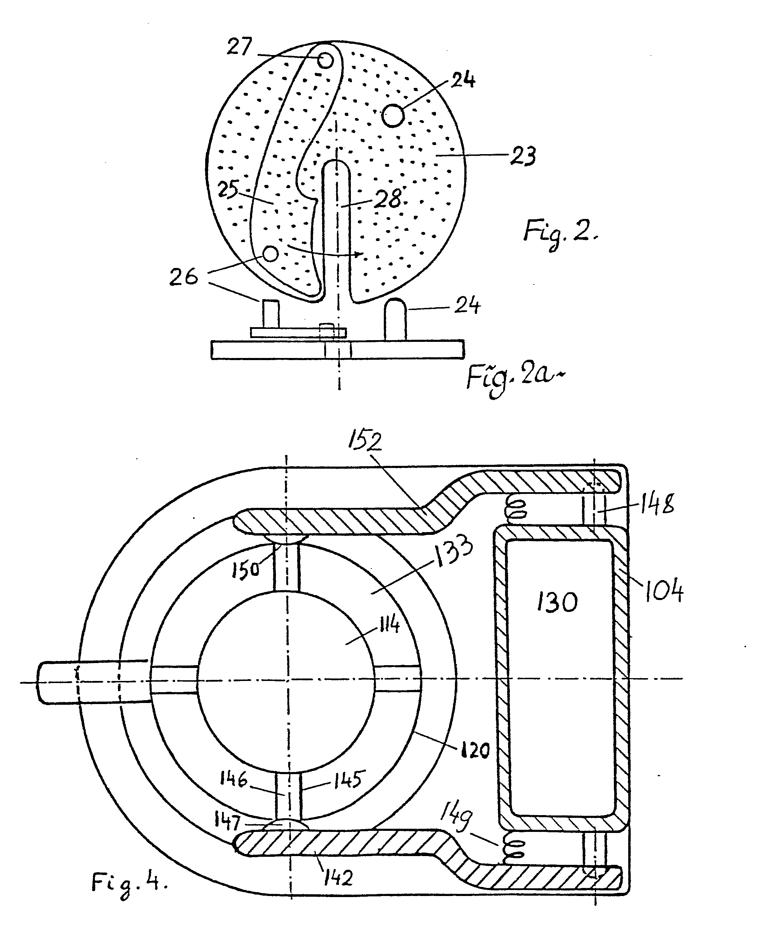

The shaft (11) of electric motor (10) goes through roof
(3) and protrudes comparatively deeply down into the space
between the roof (3) and heating plate (14). To the lower
end of the shaft (11) is secured blade (12) which thus revolves together with the shaft. Blade (12) is surrounded by basket (13). Under the basket is heating plate (14); perforated side-wall (15), and funnel-like suspension elements (16) complete this immediate environment. The basket (13) has as its bottom the heating plate (14) and side-wall (15) which is frusto-conical in Fig. 1 but may take other shapes. Perforated top (23) (shown in Figs. 2 and 2a in more detail), covers basket (13). The top has a handle (24) for easy gripping and handling. The perforated latch (25), with the help of lug (26) is turned in the direction of the arrow around pivot (27) to close the gap (28) after the basket has been filled with green coffee beans. The task of the top is to keep the coffee within the basket during roasting and grinding.

In operation, this coffee maker works as follows:

The flask (20) is filled with cold or pre-heated water, up to a marked level. The mark on the flask is set to a height ensuring that the basket with its lowest part, the heating plate (14) should not touch the water level. The basket hangs down into the air space of the flask and is kept in place with the help of suspension elements (16). The basket is filled with coffee beans (green or already somewhat, but not completely roasted). After the flask has been filled with water and the basket with the necessary amount of coffee beans, (the exact ratio of water and coffee beans is chosen according to individual taste, as in other coffee brewing methods), the flask (with the basket inside) is put on the heating platform (7), and the whole slide (5) is lifted from the base to its high position, as seen in the Fig. 1.

The axis (17) of the basket (13) and of the shaft (11) coincide in this case. In order to further facilitate the proper positioning of the flask, a circular groove (22) has been provided in the lower face of roof (3). The new, high position of the flask is ensured by tightening the wing-screw (9) on the column (4). In order to keep the drawing free from many distracting lines, the electrical wiring of the apparatus is not shown. Suffice to mention that platform (7), plate (14) and motor (10) are supplied with electricity. They can be governed manually or by thermostats and timers. The construction and operation of such devices are not discussed any further, since they are well known to persons knowledgeable in the art.

After the basket is filled with green (or already somewhat roasted) coffee beans and the flask is firmly in the position shown in the drawing, heating plate (14) is switched on, i.e. the roasting of the beans is started. At the same time the electromotor is switched on so that the blade starts to revolve slowly. Thus the coffee beans are stirred slowly. When the coffee is properly roasted, heating plate (14) is switched off and the motor is switched over to a faster speed so that the roasted coffee will be ground. In both cases, but especially in the latter high speed setting, the blade works in a way which is somewhat similar to the operation of a blade in the well known food blenders. It should be mentioned however, that the slow, stirring revolution is slower than the minimum revolution in ordinary blenders.

While the grinding is in process, the heating element in platform (7) may be switched on so that by the time the coffee is properly ground, the water in the flask becomes hot and starts boiling so that the steam above the water presses hot water through pump (18) where it exits above the coffee basket. The hot water is directed to the cupola (19) in the roof (3), from where it drips down into the basket through perforated top (23) and from the basket, through its perforated side wall (15) into the flask. The whole procedure continues until the drink in the flask reaches the desired rich brown colour and becomes a flavourful coffee. As can be seen from the above description, my method and apparatus ensures that the fragrances and aromas discharged during roasting and grinding will not be wasted, because the steam, and the water in the cupola mix with the aromas. After the coffee is brewed, platform (7) is lowered and the flask is removed, at the same time a lid may be placed on top of the flask.

Partly roasted beans and de-caffeinated beans may be used, if desired.

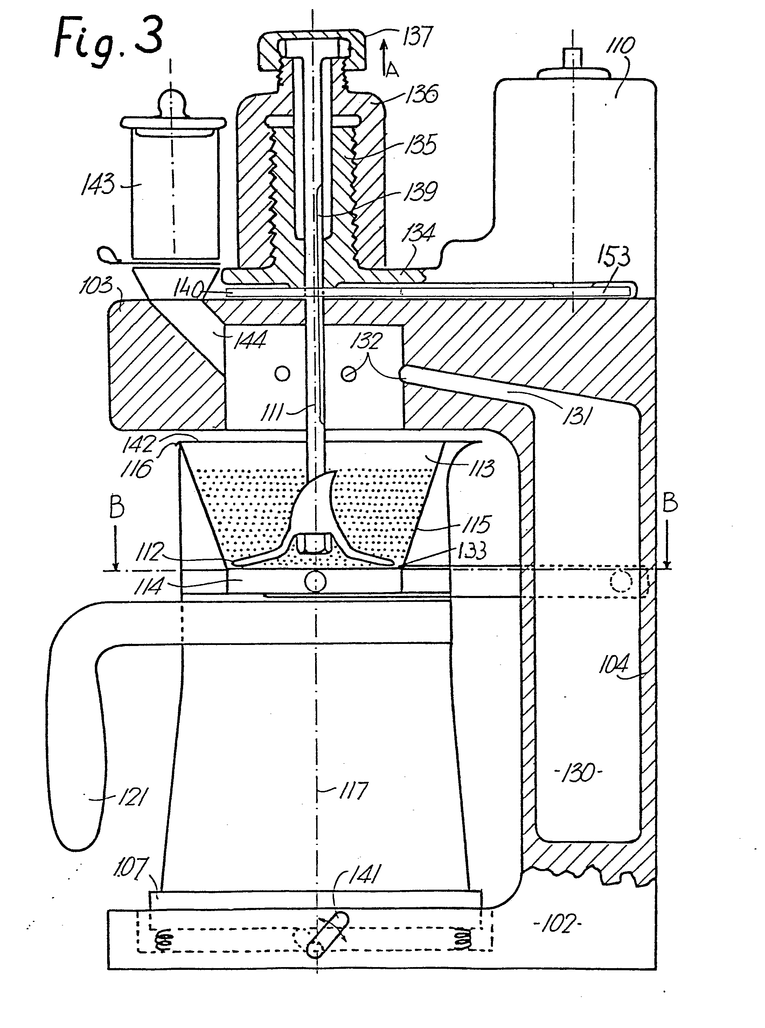

With the design according to Fig. 3 the pump (18), (shown inside the flask in Fig. 1) can be dispensed with. The inside of column (104), or at least a part of the inside is a water reservoir (130). The water in this reservoir is heated with the help of an electric coil, for instance. In order to avoid complicating the drawings, no attempt is made to show electric wiring, heating coils, switches, etc. which are readily provided by those knowledgeable in the art. Timers, automatic switches etc. are not needed in the drawings for complete understanding of the invention, the gist of which resides in the unique combination of the basket with the blade(s), inside the basket, having at least one slow (stirring) speed and at least one fast (grinding) speed, the bottom of the basket being heated and, as an additional feature, the whole before-mentioned compact device being surrounded completely or at least mainly by the brewing equipment as a complete and more or less closed unit.

According to Fig. 3, the basic idea of this invention can be very well applied to the requirements of the so called "drip" type coffee maker. The inside of column (104), i.e. the water reservoir (130) is heated electrically or by any other means (e.g. with natural gas as in some larger, restaurant-type coffee makers) and the hot water or steam is led through holes or outlets (132) into the cupola (119), from where it drips down into the basket (113). Under the basket there is a heating plate (114); but the substance in the basket to be roasted may be heated otherwise, e.g. by micro-wave. Since micro-wave heating is well known in cooking and baking appliances, it is sufficient to mention here only that the best way to irradiate the basket appears to be from the top, leading the waveguide to the upper part of the basket, which latter may be made of a ceramic or other suitable material in this case. It should be mentioned that this will influence the number of perforations.

If the roasting is effected by an electric coil, only a limited number of perforations can be provided. Only the upper surface (133) of the electrically heated plate (114) need be hot. By keeping the other surfaces of the basket comparatively cool, a paper filter may be added to the basket or textile, or plastic. With microwave heating an appropriate choice of compatible materials must be made.

On top of the roof (103) is electric motor (110) which turns shaft (111) and blade (112) through a V-belt (153) drive. Of course, shaft (111) may be driven by a chain drive, by gears, or by any other suitable means; direct drive may be used as long as the electric motor is able to produce slow speeds for stirring the contents of the basket, and the faster speeds needed for grinding. Shaft (111) has a longitudinal groove (139) into which intrudes a key connecting the shaft with wheel (140), thus ensuring a positive drive connection between the wheel and the motor and at the same time permitting up and down movement of the shaft. Moving the shaft up, and with it the blade, permits easy removal of the flask and basket.

- 10 -

While in general no details of the electrical equipment are given, nevertheless one way of supplying the heating plate (114) with electric current will be now described as an example of several possible solutions. As can be seen in Fig. 4, heating plate (114) is firmly attached to the wall of the flask (120) by several "bridges" (145). Through two of these bridges electrical conductor rods (146) are led to the outside surface of the flask from a heating element in the heating plate. The ends (150) of these conducting rods (146) are concave and match with convex contacts (147) of the arms (142). These arms are pivotally connected with column (104) at pivot pins (148). Springs (149) ensure that the contact between (147) and (150) be always firm, and that, at the same time, when no contact is needed, the flask is removable. It should be mentioned here that, in order to simplify the construction, one of the arms (152) may be rigidly fixed on the column, only the other arm need be flexibly mounted.

The apparatus outlined in Figs. 3 and 4 is used in the following way:

Knob (136) is turned by hand so that it moves in the direction of arrow (A), together with cap (137), thus lifting the shaft (111) and blade (112). This way the blade is withdrawn into cupola (119) and the flask may be pulled out easily from under the roof (103). The flask (and the basket inside the flask) thus having been freed, it is easy to clean the basket, and fill the basket with green or somewhat roasted substances, e.g. coffee beans. Then the flask may be put back on the keep-warm platform (107), and blade (112) lowered. At the same time the current in the heating plate (114) is switched on and the roasting phase is started, while the blade rotates slowly, thereby ensuring that the contents of the basket will be roasted uniformly. When the roasting is finished, the current in the heating plate is switched off and the blade is rotated at high speed in order to grind the

fresh roasted particles. The water in the reservoir has
been brought to boiling in the meantime. Hot water and/or
steam leaves the reservoir through channel (131) and
outlets (132) into the cupola (119) and from there into
the basket. The hot water or steam seeps through the basket
and flavourful, aromatic, fresh brewed coffee fills the
flask. The blade may be switched on again for slow movement to stir the ground coffee (or other substance) in the
basket during infusion. This way the ground coffee will be
utilized more thoroughly and uniformly. It should be mentioned that in Fig. 3 only a few water and/or steam outlets
are shown to keep the drawing simple. In fact, the cupola
should have discharge holes from its top to about the level
of the outlets shown in the drawing.

If less than the full flask of coffee is served immediately, the remaining part can be kept in the flask with
the help of keep-warm platform (107) which may be switched
on and off manually or automatically. The other switches
generally work with pre-set times, and in bigger restaurant-
size coffee makers can be completely programmed.

Keep-warm platform (107) can be lifted and lowered
with the help of lever arm (141). This is helpful in taking out the flask after the coffee making process is
finished, and also, with a different setting of the lever
arm one can set the gap between the upper rim (142) of the
flask and the lower surface of the top (103). In other
words, the lever arm sets the amount of steam and fragrances
which may leave the flask before the drink is served.

Sometimes the brewer may wish to make the drink from
two or more different kinds of ingredients which require
different roastings. Since coffee prices are high, some
people wish to mix coffee with chickory, for instance.
Whichever ingredient requires longer roasting, it will be fed into the basket first. Later the other ingredient
(requiring a shorter time for roasting) will be fed into
the basket from container (143) through chute (144) so
that the roasting of the two ingredients should be finished
at the same time.

Fig. 3 shows only one container (143), but several
such containers may be provided. One of these containers
may be filled with cold water. This water is then used in
quenching the roasted coffee-beans. Quenching while or
immediately after roasting is considered, by some, to further improve the aroma of a coffee.

It should be noted at this point that the above mentioned sequence of steps may be changed. For instance, a
slightly pre-roasted coffee may be ground roughly first, and
roasted only afterwards, then it may be ground again, this
time to extremely fine particles. In another example, making onion soup, an onion is coarsly chopped (ground) first
and the coarsly chopped onion will be roasted afterwards.
The dripping of water may be started while the onion is
being roasted.

While it is simpler to use the same blade for the
(slower) stirring and for the (faster) grinding step, there
may be situations where more than one blade can be used. In
the latter case the unused blade(s) may be withdrawn into
the cupola while the suitable blade is working in the basket.

By the term blade (12), as can be seen in Fig. 1, for
instance; one should not necessarily understand a practically two-dimensional, straight knife blade. A three-dimensional wing like blade, or any other suitable shape may be
employed, for example a so called spin blade, as used in
the OSTERIZER ® . Osterizer is the trade mark of the liqui-
fier-blender manufactured by the John Oster Mfg. Co.,

Milwaukie, Wisconsin, U.S.A. However, not only the shape of a blade applied in this invention, but also the material from which it is made should not be necessarily the same as used in the Osterizers. Thus, instead of metal, ceramics or other suitable materials may be used.

When terms "up", "down", "on top", "below", etc. are used herein, it should be understood that these terms have reference only to the structure shown in the drawings as it would appear to a person viewing the drawings and are utilized only to facilitate explaining the invention.

It should be emphasized that many modifications in the presently preferred embodiments will occur to those skilled in the art. Accordingly, the scope of the invention is not limited to the illustrative examples mentioned above.

- 14 -

### Best Mode of Operation

Although the success in preparation of brewed beverages is wholly dependent upon individual tastes, the preferred embodiment of the method is represented by the following:

Place green coffee beans in basket and place flask on platform.

Stir at 60 rpm, while heating, until beans turn from green- to brown-coloured coffee.

Discontinue heating.

Continue stirring for one-half minute.

Grind for 20 seconds at 6000 rpm.

Infuse with boiling water while stirring at 60 rpm.

Stop rotation of blade.

A preferred method of preparing onion soup with the apparatus would involve the following steps:

Place peeled onion in basket and place flask on platform.

Chop onion at 1500 rpm for 10 seconds.

Reduce speed to 60 rpm.

Heat basket until onion has a light brown color.

Discontinue heating.

Infuse boiling water.

Stop rotation of blade.

Claims:

1. In a method of making a beverage; roasting the basic
raw material of the beverage, grinding the roasted substance
in the same area, leading fluid through the area containing
the ground substance, thus brewing the beverage in a way
that most of the aromas and fragrances released during
roasting and grinding stay in a container where the brew is
gathered.

2. In a method as described in Claim 1, and where during
making the beverage, the roasting takes place in a pot-like
basket with the help of electric or gas heating.

3. The method recited in Claim 2, where the electric heating is carried out by resistance heating, or by induction
heating, or by microwave heating, or by the combination
thereof.

4. In a method of brewing coffee: roasting green or pre-
roasted but not fully roasted coffee beans in a perforated
basket, grinding the roasted coffee in the same basket,
letting hot water or steam seep through the basket, and
gathering the thus freshly brewed coffee in a container
which surrounds the basket leaving ample space for the brew
to drip through the basket into the container but covering
the container so that the aromas and fragrances released
during roasting and grinding stay entirely or in most part
in the container until the coffee is poured out from the
container.

5. In a method of brewing coffee: filling a perforated basket with green or pre-roasted but not fully roasted coffee
beans, heating the coffee beans to the required colour while
slowly stirring the beans in order to achieve a uniform
roasting, grinding the coffee in the basket, letting hot
water or steam through the basket, gathering the hot liquid which 5. (Cont'd)

seeped through the basket in a flask which surrounds the basket, the base of the flask being supported by a heatable keep-warm platform and the top of the flask is covered by a cupola through which the hot water or steam is lead into the flask, the cupola sealing the flask and the basket from the outside atmosphere entirely when a keep-warm platform pushes the rim of the flask tight to the cupola, and letting some steam to leave the flask when the flask is not fully lifted by the keep-warm platform.

6. In a method as recited in Claim 5 where the hot water and steam is generated in the same container where the brew will finally seep down.

7. A method as recited in Claim 5 where the hot water and/or steam is generated in a container separate from the flask in which the final brew is gathered.

8. In a method of brewing coffee or coffee substitute or a mixture thereof; filling a perforated basket from more than one chute with different ingredients for roasting in doses according to taste in a sequence which assures that roasting will be accomplished and end at about the same time so that after heating the basket and roasting the mixture, stirring it slowly, grinding can be started at a fixed point of time, and after producing a properly ground mixture, letting hot water or steam through the basket, gathering the hot liquid which seeped through the basket into a flask which surrounds the basket, the base of the flask being supported by a heatable keep-warm platform and the top of the flask is covered by a cupola, through which the hot water or steam is lead into the flask, the cupola sealing the flask and the basket from the outside atmosphere entirely when the keep-warm platform pushes up the rim of the flask tight to the cupola, and letting some steam to leave the flask when the flask is not fully lifted by the keep-warm platform.

9. In a method of making a beverage as recited in Claims 1, 2, or 3, the sequence of the two steps carried out in the basket being reversed, so that grinding takes place first, followed by roasting.

10. The method as recited in Claim 8 where the heating of the basket, and the fluid reservoirs, is carried out by gas heating, by induction heating, by resistor heating, by microwave heating, or by the combination thereof.

11. In a method of brewing coffee as recited in Claim 5, where the basket is made of metal.

12. In a method of brewing coffee as recited in Claim 5, where the basket is made of ceramics.

13. The invention as recited in Claim 5, and where paper, textile, or plastic filter is used, in addition to the perforations on the basket, to ensure that practically no lees reach the brew.

14. The invention as recited in Claim 5, and where the sequence of the roasting and grinding steps is reversed and a further grinding step is added.

15. In a method of making a beverage, the improvement comprising the steps of: roasting the foodstuff from which the beverage is to be derived while agitating said foodstuff in a perforated basket which is surrounded by a larger, sealable container, thus establishing a practically closed unit; grinding the roasted foodstuff in said basket without transporting the foodstuff, the grinding being carried out by rotation at high speed of a blade-like tool which protrudes into the basket and which previously agitated the foodstuff in the basket by slow rotation to ensure uniform roasting; directing hot fluid into the region above said foodstuff preferably to the highest point of the closed unit where the lighter-than-air fragrances released from the foodstuff congregate, thus enabling the fluid to pass through the fragrances down to the lower regions of the container while the fragrances get mixed with and absorbed by the fluid, and permitting said fluid to pass through the basket where it leaches the freshly roasted and ground foodstuff and seeps through the perforations of the basket down to the bottom of the container, while the blade-like tool slowly agitates the grind.

16. The method as defined in Claim 15, wherein said fluid is derived from water.

17. The method defined in Claim 15 wherein the foodstuff is green coffee beans.

18. The method as defined in Claim 15 wherein the foodstuff is raw onion.

19. The invention as defined in Claim 18 wherein the sequence of the roasting and grinding steps is reversed.

20. An apparatus for making beverages from a commodity to be processed therein, comprising a pervious container having motivated blade means in said pervious container operable at selective speeds for respective roasting, grinding and stirring phases of a commodity in said pervious container;

heating means operable to heat a commodity for roasting thereof in said pervious container;

flow means for effecting passage of a heated fluid into said pervious container to permeate through a commodity ground therein to produce a beverage flow into a flask;

whereby a commodity may be heated and roasted at a preselected low blade means speed and ground at a preselected high blade means speed and subjected to flow of hot fluid therethrough while being stirred at a preselected low blade means speed to produce a beverage flow into a flask from said pervious container.

21. An apparatus as set forth in Claim 20, including timer means for predetermined sequence control of operation of said heater and blade means speeds.

22. An apparatus as set forth in Claim 20, including a variable speed motor for operation of said blade means and control means for selective speed operation.

23. An apparatus as set forth in Claim 20, including a flask wherein said pervious container is disposed within said flask;

support means for said blade means comprising a roof carrying said blade means and being operable to effect an aroma sealing enclosure for said flask;

said pervious container being carried by said flask.

24. An apparatus as set forth in Claim 20, including a flask and drive means for said blade means;

support means for said flask, said drive means, and said blade means; said support means comprising a base having a warming platform for support of said flask and comprising a roof for support of said blade means in said pervious container.

25. An apparatus as set forth in Claim 20, including a variable speed drive means for operation of said blade means and control means for said drive means to effect speed variation.

26. An apparatus as set forth in Claim 25, including a flask and a support means;

said heating means being electrical and disposed to transmit heat to said pervious container and said heating means being secured within said flask; including means for removably carrying said flask on said support means and means for conducting electric current to said flask;

said latter means comprising an upright column of said support means having a pair of spaced arms secured thereto for straddling said flask and having electric contacts;

said flask having conductive means connected to said heating means and being engageable by said electric contacts and disengageable therefrom.

27. An apparatus as set forth in Claim 25, including a support means for said blade means comprising a base and an up-right column extending therefrom with a roof extending from said upright column carrying said blade means;

means for carrying a flask comprising a warming member and adjusting means whereby said warming member is vertically adjustable to position a flask thereon into a sealing coaction with said roof.

28. An apparatus as set forth in Claim 25, including a flask, a support means comprising a roof carrying said drive means; said pervious container being disposed within said flask; and means whereby said roof effects an aroma sealing enclosure for said flask.

29. An apparatus as set forth in Claim 28, wherein said flask has an open top edge and said pervious container has a flange resting thereon wherein said flange is intermediate said open top edge and said roof to effect said sealing coaction.

30. An apparatus as set forth in Claim 25, including a support means for said pervious container comprising a base having an upstanding column with a hollow interior for containing water to be heated therein;

said flow means comprising a passage from said hollow interior leading to said pervious container.

31. An apparatus as set forth in Claim 25, and support means comprising a platform for carrying said flask and said platform having means to heat fluid in said flask.

32. An apparatus as set forth in Claim 25, wherein said first mentioned heating means is disposed below said pervious container for heat conduction thereto.

33. An apparatus as set forth in Claim 25, including a support means for said blade means comprising a roof;

said drive means comprising a variable speed motor carried by said roof and having a shaft extending therethrough;

said blade means comprising a grinding blade carried on said roof and within said pervious container.

34. An apparatus as set forth in Claim 25, said drive means comprising a variable speed motor and support means therefore comprising a roof and said motor having a shaft extending therethrough;

said blade means being carried on said roof within said pervious container;

said roof having an undersurface provided with a hollow portion; and means for shifting said blade means at least partially into said hollow portion of said roof to selectively use less than the entire blade means in operation thereof.

35. An apparatus as set forth in Claim 25, including a flask; said pervious container being disposed in said flask; and means for sealing said flask with said pervious container therein to retain aroma during operation of said apparatus.

36.   An apparatus built on a horizontal base, a vertical column standing on the base and supporting a roof, a platform on the base; a flask which is slightly shorter than the column, and its top is open; in the flask a perforated pot-like basket equipped with heating means, a blade inside the basket, the blade rotated by an electric motor slowly for stirring coarse foodstuff or vegetable matter with which the basket may be filled, and rotatable fast to grind the contents of the basket; a refillable reservoir for liquids, equipped with heating means to produce steam and hot liquid, duct means for conveying the steam or hot liquid from the reservoir into the roof from where the hot fluid drops into the basket; said flask, which surrounds the basket and collects brew seeping through the basket being positioned on said platform; said platform, with the help of a lever arm, being movable up and down, pushing up the flask with its open top toward near the roof, in which case the flask will be nearly closed, or pushing the flask higher until it touches the roof, in which latter case the flask becomes completely closed and its contents will be completely separated from the outside atmosphere, thus ensuring that a part or all of the aromas and fragrances emerging from the basket and brew stay in the flask until the brew is removed;  the removal of the flask being facilitated on the one hand by lifting the blade out of the basket and withdrawing it partly or entirely into the shelf with the help of a bolt connected to the shaft farthest from the blade, the bolt rotated up, and, on the other hand, by lowering the platform, turning the lever arm counterclockwise.

Fig. 1

27

24

23

25    28

26

24

Fig. 2.

Fig. 2a.

152

150    133

114

130    104

120

146    145

147    149

142

Fig. 4.

148

Fig. 3

**0041082**

European Patent Office

EUROPEAN SEARCH REPORT

Application number

EP 80 30 1792

## DOCUMENTS CONSIDERED TO BE RELEVANT

| Category | Citation of document with indication, where appropriate, of relevant passages | Relevant to claim |
|---|---|---|
| | <u>US - A - 1 604 058</u> (MAGER) <br><br> * the whole document * <br><br> -- | 1-6,20 23,26 |
| | <u>DE - C - 606 520</u> (DE VARGAS) <br><br> * the whole document * <br><br> -- | 1-4,7, 20 |
| | <u>US - A - 2 325 683</u> (KAYDEN) <br><br> * pages 1 and 2; figure 1 * <br><br> -- | 1-3,6, 8,9,10 20,23, 24,26 |
| | <u>FR - A - 1 188 039</u> (BONNET et al.) <br><br> * the whole document * <br><br> -- | 1,20 |
| | <u>US - A - 2 325 684</u> (KAYDEN) <br><br> * the whole document * <br><br> -- | 1,20 |
| | <u>FR - A - 1 532 404</u> (JOAS) <br><br> * the whole document * <br><br> ------ | 1,20 |

CLASSIFICATION OF THE APPLICATION (Int. Cl.³)

A 47 J 31/42
A 23 N 12/12

TECHNICAL FIELDS SEARCHED (Int. Cl.³)

A 47 J
A 23 N

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |

| Place of search | Date of completion of the search | Examiner |
|---|---|---|
| The Hague | 13-03-1981 | SCHARTZ |

EPO Form 1503.1   06.78